(19) Europäisches Patentamt
European Patent Office
Office européen des brevets

(11) EP 1 338 625 B1

(12) **EUROPEAN PATENT SPECIFICATION**

(45) Date of publication and mention of the grant of the patent:
**28.12.2005 Bulletin 2005/52**

(21) Application number: **02745866.0**

(22) Date of filing: **05.07.2002**

(51) Int Cl.[7]: **C08L 69/00**

(86) International application number:
**PCT/JP2002/006857**

(87) International publication number:
**WO 2003/004566 (16.01.2003 Gazette 2003/03)**

(54) **FLAME-RETARDANT THERMOPLASTIC RESIN COMPOSITION**

FLAMMHEMMENDE THERMOPLASTISCHE HARZZUSAMMENSETZUNG

COMPOSITION DE RESINE THERMOPLASTIQUE IGNIFUGE

(84) Designated Contracting States:
**BE DE FR GB NL**

(30) Priority: **05.07.2001 JP 2001205078**

(43) Date of publication of application:
**27.08.2003 Bulletin 2003/35**

(73) Proprietor: **KANEKA CORPORATION**
**Osaka-shi, Osaka 530-8288 (JP)**

(72) Inventors:
- **MIYATAKE, Nobuo, Kaneka Corporation**
  **Takasago-shi, Hyogo 676-8688 (JP)**
- **TONE, Hiroshi, Kaneka Corporation**
  **Takasago-shi, Hyogo 676-8688 (JP)**
- **TAKAKI, Akira, Kaneka Corporation**
  **Takasago-shi, Hyogo 676-8688 (JP)**

(74) Representative: **Vossius & Partner**
**Siebertstrasse 4**
**81675 München (DE)**

(56) References cited:
**DE-A- 19 941 823** **JP-A- 2000 212 428**
**JP-A- 2000 264 935**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to the use of an antioxidant and a specific polyorganosiloxane-containing graft copolymer as flame retardants in a flame-retardant polycarbonate resin composition.

Polycarbonate resins are extensively used as electrical/electronic parts, in OA apparatus and domestic articles, and as building materials because of their excellent properties including impact resistance, heat resistance, and electrical properties. Polycarbonate resins have higher flame retardancy than polystyrene resins and other resins. However, attempts are being made to improve the flame retardancy of polycarbonate resins by the addition of various flame retardants so as to make the resins suitable for use in applications where high flame retardancy is required, mainly in the field of electrical/electronic parts, OA apparatus, etc. For example, organic halogen compounds and organophosphorus compounds have been added extensively. However, most of the organic halogen compounds and organophosphorus compounds have a problem concerning toxicity and, in particular, the organic halogen compounds have a problem that they generate a corrosive gas upon combustion. Because of these, there recently is a growing desire for a technique for imparting flame retardancy with a nonhalogenated phosphorus-free flame retardant.

Use of polyorganosiloxane compounds (also called silicones) as nonhalogenated phosphorus-free flame retardants has been proposed. For example, Japanese Patent Laid-Open No. 36365/1979 describes a technique of obtaining a flame-retardant resin which comprises kneading a silicone resin comprising a monoorganopolysiloxane together with a non-silicone polymer.

Japanese Patent Publication No. 48947/1991 discloses that a mixture of a silicone resin and a salt of a Group IIA metal imparts flame retardancy to thermoplastic resins.

In Japanese Patent Laid-Open No. 113712/1996 is described a method of obtaining a flame-retardant resin composition which comprises dispersing into a thermoplastic resin a silicone resin prepared by mixing 100 parts by weight of a polyorganosiloxane with from 10 to 150 parts by weight of a silica filler.

Japanese Patent Laid-Open No. 139964/1998 discloses that a flame-retardant resin composition is obtained by adding a solvent-soluble silicone resin having a weight-average molecular weight of from 10,000 to 270,000 to a non-silicone resin having aromatic rings.

However, the silicone resins used in the techniques disclosed in those references impair the impact resistance of the resin compositions when added in too large an amount, although they are effective in some degree in imparting flame retardancy. Those techniques of the related art hence have a problem that it is difficult to obtain a flame-retardant resin composition having a balanced combination of flame retardancy and impact resistance.

Japanese Patent Laid-Open No. 2000-17029 discloses that a flame-retardant resin composition is obtained by incorporating into a thermoplastic resin a composite rubber flame retardant obtained by graft-polymerizing a vinyl monomer with a composite rubber comprising a polyorganosiloxane rubber and a poly(alkyl (meth)acrylate) rubber.

Japanese Patent Laid-Open No. 2000-226420 discloses that a flame-retardant resin composition is obtained by incorporating into a thermoplastic resin a polyorganosiloxane-based flame retardant obtained by grafting a vinyl monomer onto composite particles comprising a polyorganosiloxane having aromatic groups and a vinyl polymer.

Japanese Patent Laid-Open No. 2000-264935 discloses that a flame-retardant resin composition is obtained by incorporating into a thermoplastic resin a polyorganosiloxane-containing graft copolymer obtained by graft-polymerizing a vinyl monomer with polyorganosiloxane particles of 0.2 μm or smaller.

The flame-retardant resin compositions disclosed in Japanese Patent Laid-Open Nos. 2000-17029, 2000-226420, and 2000-264935 each have insufficient flame retardancy although satisfactory in impact resistance. Those resin compositions hence have a problem that they have a poor balance between flame retardancy and impact resistance.

An object of the invention is to provide a flame-retardant polycarbonate resin composition excellent in both flame retardancy and impact resistance with a nonhalogenated phosphorus-free flame retardant.

The present inventors made intensive investigations in order to eliminate the problems described above. As a result, they have found that when a polycarbonate resin, a polyorganosiloxane-containing graft copolymer, a fluororesin, and an antioxidant are used in respective specific amounts, then a flame-retardant resin composition having excellent flame retardancy and intact impact resistance is obtained. The invention has been completed based on this finding.

The invention relates to the following:

(1) Use of an antioxidant and a polyorganosiloxane-containing graft copolymer obtained by polymerizing at least one vinyl monomer (b-2) in the presence of polyorganosiloxane particles (b-1) as flame retardants in a flame-retardant thermoplastic resin composition comprising:

(A) 100 parts (parts by weight; the same applies hereinafter) of a polycarbonate resin,
(B) from 1 to 20 parts the polyorganosiloxane-containing graft copolymer,

(C) from 0.05 to 1 part a fluororesin, and
(D) from 0.03 to 2 parts the antioxidant.

(2) The use as described in (1),
wherein the polyorganosiloxane-containing graft copolymer is one obtained by polymerizing from 60 to 10% (% by weight; the same applies hereinafter) at least one vinyl monomer (b-2) in the presence of from 40 to 90% polyorganosiloxane particles (b-1) having an average particle diameter of from 0.008 to 0.6 μm, and
wherein a polymer obtained by polymerizing the vinyl monomer has a solubility parameter of from 9.15 to 10.15 $(cal/cm^3)^{1/2}$.
(3) The use as described in (1) or (2), wherein the polyorganosiloxane particles (b-1) are in the form of a latex.
(4) The use as described in any one of (1) to (3), wherein the vinyl monomer (b-2) is at least one monomer selected from the group consisting of an aromatic vinyl monomer, a vinyl cyanide monomer, a (meth)acrylic ester monomer, and a carboxyl-containing vinyl monomer.

The flame-retardant thermoplastic resin composition comprises (A) 100 parts of a polycarbonate resin, (B) from 1 to 20 parts of a polyorganosiloxane-containing graft copolymer obtained by polymerizing at least one vinyl monomer (b-2) in the presence of polyorganosiloxane particles (b-1), (C) from 0.05 to 1 part of a fluororesin, and (D) from 0.03 to 2 parts of an antioxidant.

The polycarbonate resin (A) in the present invention includes a resin mixture containing generally at least 50%, preferably at least 70% polycarbonate.

Preferred examples of the polycarbonate resin (A) from the standpoints of profitability and a balance between flame retardancy and impact resistance include polycarbonates, polycarbonate/polyester mixed resins such as polycarbonate/poly(ethylene terephthalate) mixed resins and polycarbonate/poly(butylene terephthalate) mixed resins, polycarbonate/acrylonitrile-styrene copolymer mixed resins, polycarbonate/butadiene rubber-styrene copolymer (HIPS resin) mixed resins, polycarbonate/acrylonitrile-butadiene rubber-styrene copolymer (ABS resin) mixed resins, polycarbonate/acrylonitrile-butadiene rubber-α-methylstyrene copolymer mixed resins, polycarbonate/styrene-butadiene rubber-acrylonitrile-N-phenylmaleimide copolymer mixed resins, and polycarbonate/acrylonitrile-acrylic rubber-styrene copolymer (AAS resin) mixed resins. Such mixed resins may be used as a mixture of two or more thereof.

Among these, preferred are polycarbonates and polycarbonate/polyester mixed resins. Polycarbonates are more preferred.

The polycarbonate constituting or contained in the polycarbonate resin or polycarbonate-containing mixed resin has a viscosity-average molecular weight of generally from 10,000 to 50,000, preferably from 15,000 to 25,000, from the standpoint of moldability.

The polyorganosiloxane-containing graft copolymer (B) is an ingredient serving as a flame retardant. It is obtained by graft-polymerizing at least one vinyl monomer (b-2) with polyorganosiloxane particles (b-1).

The polyorganosiloxane particles (b-1) to be used for producing the polyorganosiloxane-containing graft copolymer (B) have an average particle diameter, as determined by the light scattering method or electron microscopy, of preferably from 0.008 to 0.6 μm, more preferably from 0.008 to 0.2 μm, even more preferably from 0.01 to 0.15 μm, most preferably from 0.01 to 0.1 μm, from the standpoint of imparting flame retardancy. Polyorganosiloxane particles having an average particle diameter smaller than 0.008 μm are difficult to obtain. On the other hand, use of polyorganosiloxane particles having an average particle diameter exceeding 0.6 μm tends to result in impaired flame retardancy. The polyorganosiloxane particles have desirably been regulated so as to have a particle diameter distribution in which the coefficient of variation [100 X (standard deviation)/(average particle diameter)] (%) is preferably from 10 to 70%, more preferably from 20 to 60%, most preferably from 20 to 50%, from the standpoint of enabling the resin composition, which contains the flame retardant, to give a molding having a satisfactory surface appearance.

The term "polyorganosiloxane particles (b-1)" is used herein as a conception which includes not only particles made of a polyorganosiloxane alone but also particles made of a modified polyorganosiloxane containing up to 5% one or more other (co)polymers. Namely, the polyorganosiloxane particles may contain, for example, poly(butyl acrylate), a butyl acrylate-styrene copolymer, or the like therein in an amount of up to 5%.

Examples of the polyorganosiloxane particles (b-1) include polydimethylsiloxane particles, polymethylphenylsiloxane particles, and dimethylsiloxanediphenylsiloxane copolymer particles. These particulate materials may be used alone or in combination of two or more thereof.

The polyorganosiloxane particles (b-1) can be obtained, for example, by polymerizing (1) an organosiloxane, (2) a bifunctional silicone compound, (3) an organosiloxane and a bifunctional silane compound, (4) an organosiloxane and a silane compound containing a polymerizable vinyl group, (5) a bifunctional silane compound and a silane compound containing a polymerizable vinyl group, or (6) an organosiloxane, a bifunctional silane compound, and a silane compound containing a polymerizable vinyl group, or by polymerizing any of these together with a silane compound having 3 or more functional groups.

The organosiloxane and the bifunctional silane compound are ingredients which constitute the backbone of the polyorganosiloxane chain. Examples of the organosiloxane include hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), and hexadecamethylcyclooctasiloxane (D8). Examples of the bifunctional silane compound include diethoxydimethylsilane, dimethoxydimethylsilane, diphenyldimethoxysilane, diphenyldiethoxysilane, 3-chloropropylmethyldimethoxysilane, 3-glycidoxypropylmethyldimethoxysilane, heptadecafluorodecylmethyldimethoxysilane, trifluoropropylmethyldimethoxysilane, and octadecylmethyldimethoxysilane. From the standpoints of profitability and impartation of satisfactory flame retardancy, it is preferred to use D4, a mixture of two or more of D3 to D7, or a mixture of two or more of D3 to D8 in an amount of from 70 to 100%, preferably from 80 to 100%, optionally with from 0 to 30%, preferably from 0 to 20% other ingredient(s) such as diphenyldimethoxysilane, diphenyldiethoxysilane, and the like.

The silane compound containing a polymerizable vinyl group is an ingredient which, through copolymerization with one or more of the organosiloxane, bifunctional silane compound, silane compound having 3 or more functional groups, etc., serves to incorporate the polymerizable vinyl group into a side chain or terminal of the copolymer. This polymerizable vinyl group functions as an active site for grafting when the polymer is chemically bonded to the vinyl (co)polymer to be formed from the vinyl monomer (b-2), which will be described later. The silane compound containing a polymerizable vinyl group can be used also as a crosslinking agent because crosslinks between such active sites for grafting can be formed through radical reaction with a free-radical polymerization initiator. The free-radical polymerization initiator can be the same as that to be used for the graft polymerization which will be described later. Even when the polymer is thus crosslinked by radical reaction, the active sites for grafting partly remain after the crosslinking. Grafting on the crosslinked polymer is hence possible.

In the invention, a silane compound containing no polymerizable vinyl group can also be used. When the polyorganosiloxane particles (b-1) contain no polymerizable vinyl group, a specific free-radical initiator such as t-butyl peroxylaurate is used to abstract a hydrogen atom from a silicon-bonded organic group such as methyl. The free radicals thus generated polymerize the vinyl monomer (b-2) to form grafts.

Examples of the silane compound include silane compounds represented by formula (I):

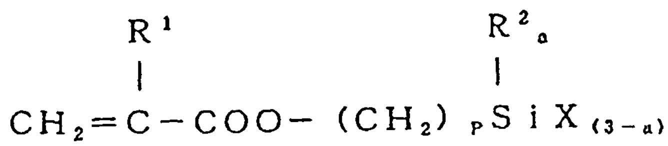

(wherein $R^1$ represents a hydrogen atom or a methyl group; $R^2$ represents a monovalent hydrocarbon group having 1 to 6 carbon atoms; X represents an alkoxy group having 1 to 6 carbon atoms; a is 0, 1, or 2; and p is a number of 1 to 6); silane compounds represented by formula (II):

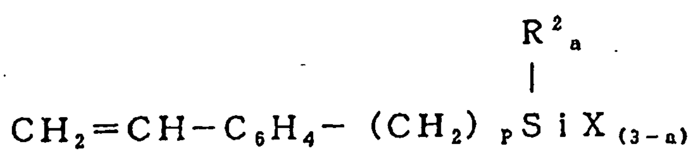

(wherein $R^2$, X, a, and p have the same meanings as in formula (I));
silane compounds represented by formula (III):

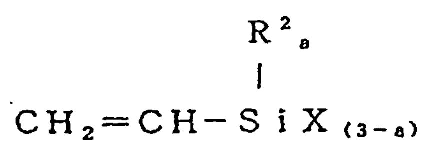

(wherein $R^2$, X, and a have the same meanings as in formula (I));
silane compounds represented by formula (IV):

$$CH_2=CH-R^3-\overset{\overset{\displaystyle R^2_a}{|}}{Si}X_{(3-a)}$$

(wherein $R^2$, X, and a have the same meanings as in formula (I); and $R^3$ represents a divalent hydrocarbon group having 1 to 6 carbon atoms); and silane compounds represented by formula (V) :

$$HS-R^4-\overset{\overset{\displaystyle R^2_a}{|}}{Si}X_{(3-a)}$$

(wherein $R^2$, X, and a have the same meanings as in formula (I); and $R^4$ represents a divalent hydrocarbon group having 1 to 18 carbon atoms).

Examples of $R^2$ in formulae (I) to (V) include alkyl groups, such as methyl, ethyl, and propyl, and phenyl. Examples of X include alkoxy groups having 1 to 6 carbon atoms, such as methoxy, ethoxy, propoxy, and butoxy. Examples of $R^3$ in formula (IV) include methylene, ethylene, trimethylene, and tetramethylene. Examples of $R^4$ in formula (V) include methylene, ethylene, trimethylene, and tetramethylene.

Examples of the silane compounds represented by formula (I) include β-methacryloyloxyethyldimethoxymethylsilane, γ-methacryloyloxypropyldimethoxymethylsilane, γ-methacryloyloxypropyltrimethoxysilane, γ-methacryloyloxypropyldimethylmethoxysilane, γ-methacryloyloxypropyltriethoxysilane, γ-methacryloyloxypropyldiethoxymethylsilane, γ-methacryloyloxypropyltripropoxysilane, γ-methacryloyloxypropyldipropoxymethylsilane, γ-acryloyloxypropyldimethoxymethylsilane, and γ-acryloyloxypropyltrimethoxysilane. Examples of the silane compounds represented by formula (II) include p-vinylphenyldimethoxymethylsilane, p-vinylphenyltrimethoxysilane, p-vinylphenyltriethoxysilane, and p-vinylphenyldiethoxymethylsilane. Examples of the silane compounds represented by formula (III) include vinylmethyldimethoxysilane, vinylmethyldiethoxysilane, vinyltrimethoxysilane, and vinyltriethoxysilane. Examples of the silane compounds represented by formula (IV) include allylmethyldimethoxysilane, allylmethyldiethoxysilane, allyltrimethoxysilane, and allyltriethoxysilane. Examples of the silane compounds represented by formula (V) include mercaptopropyltrimethoxysilane and mercaptopropyldimethoxymethylsilane. Preferred of these from the standpoint of profitability are the silane compounds represented by formulae (I), (III), and (V).

When the silane compound containing a polymerizable vinyl group is the trialkoxysilane type, it functions also as the following silane compound having 3 or more functional groups.

The silane compound having 3 or more functional groups is an ingredient which, when copolymerized with one or more of the monomers described above, i.e., the organosiloxane, bifunctional silane compound, and silane compound containing a polymerizable vinyl group, or with other monomer(s), serves to incorporate a crosslinked structure into the polyorganosiloxane and thereby impart rubber-like elasticity thereto. Namely, this silane compound is used as a crosslinking agent for the polyorganosiloxane. Examples thereof include tetrafunctional and trifunctional alkoxysilane compounds such as tetraethoxysilane, methyltriethoxysilane, methyltrimethoxysilane, ethyltriethoxysilane, 3-glycidoxypropyltrimethoxysilane, heptadecafluorodecyltrimethoxysilane, trifluoropropyltrimethoxysilane, and octadecyltrimethoxysilane. Among these, preferred are tetraethoxysilane and methyltriethoxysilane from the standpoint of attaining a high crosslinking efficiency.

In polymerization, the organosiloxane, bifunctional silane compound, silane compound containing a polymerizable vinyl group, and silane compound having 3 or more functional groups are used generally in the following proportions.

The proportion of the organosiloxane and/or the bifunctional silane compound is preferably from 50 to 99.9%, more preferably from 60 to 99% (the ratio of the amount of the organosiloxane to that of the bifunctional silane compound is generally from 100/0 to 0/100, preferably from 100/0 to 70/30, by weight). The proportion of the silane compound containing a polymerizable vinyl group is preferably from 0 to 40%, more preferably from 0.5 to 30%. The proportion of the silane compound having 3 or more functional groups is preferably from 0 to 50%, more preferably from 0.5 to 39%. The proportion of the silane compound containing a polymerizable vinyl group and that of the silane compound having 3 or more functional groups are not simultaneously 0%, and either of these is preferably 0.1% or higher.

When the proportion of the organosiloxane and bifunctional silane compound is too low, the polyorganosiloxane-containing graft copolymer to be obtained tends to give a brittle resin composition when compounded with the other ingredients. On the other hand, too high proportions thereof result in too small amounts of the silane compound containing a polymerizable vinyl group and of the silane compound having 3 or more functional groups and, hence, the effect of using these compounds is less apt to be produced. When the proportion of the silane compound containing a polymerizable vinyl group or the silane compound having a functionality of 3 or higher is too low, the impartation of flame retardancy is insufficient. On the other hand, too high proportions thereof tend to result in a graft copolymer which, when compounded with the other ingredients, gives a brittle resin composition.

The polyorganosiloxane particles (b-1) are preferably in the form of a latex from the standpoint of production.

The polyorganosiloxane particles (b-1) are produced preferably by emulsion-polymerizing one or more polyorganosiloxane-forming ingredients which, for example, comprise one or more of the organosiloxane, bifunctional silane compound, and silane compound containing a polymerizable vinyl group described above and optionally contain the silane compound having 3 or more functional groups.

The emulsion polymerization can be accomplished, for example, by subjecting the polyorganosiloxane-forming ingredients and water to the action of mechanical shearing in the presence of an emulsifier to emulsify the polyorganosiloxane-forming ingredients into the water and making the emulsion acidic. When the mechanical shearing gives an emulsion having a droplet size of several micrometers or larger, the average particle diameter of the polyorganosiloxane particles to be obtained through polymerization can be regulated so as to be in the range of from 0.02 to 0.6 μm by regulating the amount of the emulsifier to be used. The polyorganosiloxane particles thus obtained can have a particle diameter distribution in which the coefficient of variation [100 X (standard deviation)/(average particle diameter)] (%) is from 20 to 70%.

When polyorganosiloxane particles of 0.1 μm or smaller having a narrow particle diameter distribution are to be produced, it is preferred to polymerize the monomer(s) in two or more steps. For example, this process is conducted in the following manner. The polyorganosiloxane-forming ingredients, water, and an emulsifier are emulsified by mechanical shearing to obtain an emulsion having a droplet size of several micrometers or larger. From 1 to 20% of the emulsion is first emulsion-polymerized in an acid state to obtain polyorganosiloxane particles. Thereafter, the remaining emulsion is added thereto and polymerized in the presence of these particles serving as seeds. The polyorganosiloxane particles thus obtained have an average particle diameter of from 0.02 to 0.1 μm depending on the amount of the emulsifier and can have a regulated particle diameter distribution with a coefficient of variation of from 10 to 60%. A more preferred method is to conduct multistage polymerization in the same manner as described above except that a vinyl (co)polymer obtained by (co)polymerizing, by ordinary emulsion polymerization, the same vinyl monomer(s) (e.g., styrene, butyl acrylate, and methyl methacrylate) as those to be used in the graft polymerization which will be described later is used in place of the polyorganosiloxane seed particles. The polyorganosiloxane (modified polyorganosiloxane) particles thus obtained have an average particle diameter of from 0.008 to 0.1 μm, depending on the emulsifier amount and can have a regulated particle diameter distribution with a coefficient of variation of from 10 to 50%.

The emulsion having a droplet size of several micrometers or larger can be prepared with a high-speed stirrer such as a homomixer.

For the emulsion polymerization is used an emulsifier which is not deprived of its emulsifying ability under acidic conditions. Examples of the emulsifier include alkylbenzenesulfonic acids, sodium alkylbenzenesulfonates, alkylsulfonic acids, sodium alkylsulfonates, sodium (di)alkylsulfosuccinates, sodium polyoxyethylene nonylphenyl ethersulfonates, and sodium alkylsulfates. These may be used alone or in combination of two or more thereof. Among these, preferred are alkylbenzenesulfonic acids, sodium alkylbenzenesulfonates, alkylsulfonic acids, sodium alkylsulfonates, and sodium (di)alkylsulfosuccinates because the emulsion obtained with any of these has relatively high emulsion stability. Especially preferred are alkylbenzenesulfonic acids and alkylsulfonic acids because they function also as a polymerization catalyst for the polyorganosiloxane-forming ingredients.

The acid state is obtained by adding to the system an inorganic acid, e.g., sulfuric acid or hydrochloric acid, or an organic acid, e.g., an alkylbenzenesulfonic acid, alkylsulfonic acid, or trifluoroacetic acid. The pH of the system is regulated preferably to 1 to 3, more preferably to 1.0 to 2.5, from the standpoints of preventing the production apparatus from corrosion and of obtaining a moderate rate of polymerization.

Heating for the polymerization is conducted preferably at 60 to 120°C, more preferably at 70 to 100°C, from the standpoint of obtaining a moderate rate of polymerization.

Under acidic conditions, the Si-O-Si bonds constituting the backbone of the polyorganosiloxane are in an equilibrium state with respect to cleavage and formation. Since this equilibrium shifts with temperature, it is preferred to neutralize the system by adding an aqueous solution of an alkali such as, e.g., sodium hydroxide, potassium hydroxide, or sodium carbonate in order to stabilize the polyorganosiloxane chain. Furthermore, the lower the temperature, the more the equilibrium shifts to the siloxane bond formation side. Namely, a polyorganosiloxane having a higher molecular weight or a higher degree of crosslinking is apt to be yielded at lower temperatures. Consequently, for obtaining a polyorganosiloxane having a high molecular weight or a high degree of crosslinking, it is preferred that after the polyorganosiloxane-forming ingredients have been polymerized at 60°C or higher, the reaction system be cooled to room temperature or lower, held for about from 5 to 100 hours, and then neutralized.

When polyorganosiloxane particles are thus obtained, for example, by polymerizing an organosiloxane or bifunctional silane compound with a silane compound containing a polymerizable vinyl group, the polyorganosiloxane usually is a random copolymer having polymerizable vinyl groups.

When a silane compound having 3 or more functional groups is copolymerized, the resultant polyorganosiloxane has a network structure formed by crosslinking. Furthermore, when polymerizable vinyl groups of the polyorganosiloxane are crosslinked to each other with a free-radical polymerization initiator such as that to be used for the graft polymerization which will be described below, the polyorganosiloxane comes to have a crosslinked structure formed by the chemical bonding of polymerizable vinyl groups to each other. In this polyorganosiloxane, a part of the polymerizable vinyl groups originally contained therein remains unreacted. The polyorganosiloxane particles have a toluene insoluble content of preferably 95% or lower, more preferably 90% or lower, from the standpoint of impartation of flame retardancy. The toluene insoluble content is the proportion of the components which remain undissolved when 0.5 g of the particles are immersed in 80 mL of toluene at room temperature for 24 hours.

At least one vinyl monomer (b-2) is graft-polymerized with the polyorganosiloxane particles obtained by the process described above, whereby a flame retardant for thermoplastic resins is obtained which comprises a polyorganosiloxane-containing graft copolymer.

The flame retardant has a structure made up of the polyorganosiloxane particles and the vinyl monomer (b-2) grafted thereto. This polyorganosiloxane-containing graft copolymer has a degree of grafting of preferably from 5 to 150%, more preferably from 15 to 120%, from the standpoint of attaining a satisfactory balance between flame retardancy and impact resistance.

The vinyl monomer (b-2) is an ingredient used for obtaining a flame retardant comprising the polyorganosiloxane-containing graft copolymer. However, it serves also as an ingredient which, when the flame retardant is incorporated into a thermoplastic resin to impart flame retardancy thereto, secures compatibility between the flame retardant and the thermoplastic resin and thereby enables the flame retardant to be evenly dispersed into the thermoplastic resin. Because of this, the vinyl monomer (b-2) preferably is one selected so as to give a polymer having a solubility parameter of generally from 9.15 to 10.15 $(cal/cm^3)^{1/2}$, preferably from 9.17 to 10.10 $(cal/cm^3)^{1/2}$, more preferably from 9.20 to 10.05 $(cal/cm^3)^{1/2}$. Use of a vinyl monomer which gives a polymer having a solubility parameter outside the range tends to result in reduced flame retardancy.

The solubility parameter is a value calculated with Small's group parameter by the group contribution method described in *Polymer Handbook,* 4th ed., John Wiley & Sons, Inc., sec. VII, pp. 682-685, 1999. For example, the solubility parameters of several polymers are as follows: poly(methyl methacrylate) (molecular weight of repeating units, 100 g/mol; density, 1.19 $g/cm^3$), 9.25 $(cal/cm^3)^{1/2}$; poly(butyl acrylate) (molecular weight of repeating units, 128 g/mol; density, 1.06 $g/cm^3$), 8.97 $(cal/cm^3)^{1/2}$; poly(butyl methacrylate) (molecular weight of repeating units, 142 g/mol; density, 1.06 $g/cm^3$), 9.47 $(cal/cm^3)^{1/2}$; polystyrene (molecular weight of repeating units, 104; density, 1.05 $g/cm^3$), 9.03 $(cal/cm^3)^{1/2}$; and polyacrylonitrile (molecular weight of repeating units, 53; density, 1.18 $g/cm^3$), 12.71 $(cal/cm^3)^{1/2}$.

These values of density for the respective polymers are given in *ULLMANN'S ENCYCLOPEDIA OF INDUSTRIAL CHEMISTRY,* Vol. A21, VCH, p.169, 1992. With respect to copolymers, the solubility parameters, δc, thereof are as follows.

In a copolymer in which the content of the component(s) other than the main component is lower than 5% by weight, the solubility parameter of the main component is taken as that of the copolymer. In a copolymer in which the content of the component(s) other than the main component is 5% by weight or higher, the solubility parameter of the copolymer is calculated on the assumption that the additive rule holds based on the proportions by weight.

Namely, in a copolymer made up of m kinds of vinyl monomers, the solubility parameter of the copolymer, δc, can be calculated from the solubility parameter of the homopolymer of each vinyl monomer, δn, and the proportion by weight thereof, Wn, using equation (1).

$$\delta c = \sum_{n=1}^{n=m} \delta n Wn / \sum_{n=1}^{n=m} Wn$$

For example, in determining the solubility parameter of a copolymer consisting of 75% styrene and 25% acrylonitrile, the solubility parameter of 9.03 $(cal/cm^3)^{1/2}$ for polystyrene and the solubility parameter of 12.71 (cal/

$cm^3)^{1/2}$ for polyacrylonitrile are substituted into equation (1). As a result, a value of 9.95 $(cal/cm^3)^{1/2}$ is obtained.

Furthermore, in a vinyl polymer obtained by polymerizing vinyl monomers in two or more steps so that the steps differ from one another in vinyl monomer kind, the solubility parameter thereof, δs, is calculated on the assumption that the additive rule holds based on the proportions by weight, i.e., the value obtained by dividing the weight of the vinyl polymer obtained in each step by the total weight of the vinyl polymers finally obtained.

Namely, the solubility parameter of such a copolymer obtained by polymerization in q steps can be calculated from the solubility parameter of the polymer, δi, obtained in each step and the proportion by weight thereof, Wi, using equation (2).

$$\delta s = \sum_{i=1}^{i=q} \delta i W i / \sum_{i=1}^{i=q} W i$$

For example, in a copolymer produced by two-step polymerization in which 50 parts of a copolymer of 75% styrene and 25% acrylonitrile is obtained in the first step and 50 parts of a polymer of methyl methacrylate is obtained in the second step, the solubility parameter of the copolymer is calculated by substituting the solubility parameter of 9.95 $(cal/cm^3)^{1/2}$ for the copolymer of 75% styrene and 25% acrylonitrile and the solubility parameter of 9.25 $(cal/cm^3)^{1/2}$ for the poly(methyl methacrylate) into equation (2). Thus, a value of 9.60 $(cal/cm^3)^{1/2}$ is obtained.

The amount of the vinyl monomer (b-2) to be used is preferably from 60 to 10%, more preferably from 40 to 20%, most preferably from 35 to 25%, based on the total amount of the vinyl monomer (b-2) and the polyorganosiloxane particles (b-1).

When the amount of the vinyl monomer (b-2) used is too large or too small, impartation of flame retardancy tends to be insufficient.

The vinyl monomer (b-2) represents the monomer containing a polymerizable vinyl group.

Preferred examples of the vinyl monomer (b-2) include aromatic vinyl monomers such as styrene, α-methylstyrene, p-methylstyrene, and p-butylstyrene, vinyl cyanide monomers such as acrylonitrile and methacrylonitrile, (meth)acrylic ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate, and carboxyl-containing vinyl monomers such as itaconic acid, (meth)acrylic acid, fumaric acid, and maleic acid.

These vinyl monomers may be used alone or in combination of two or more thereof, as long as the polymer to be obtained therefrom has a solubility parameter within the range shown above.

The graft polymerization can be accomplished by the ordinary seed emulsion polymerization method, in which the vinyl monomer (b-2) is polymerized in a latex of the polyorganosiloxane particles (b-1) by radical polymerization. The vinyl monomer (b-2) may be polymerized in one step or in two or more steps.

Methods for the radical polymerization are not particularly limited. For example, the polymerization can be conducted by a method in which the reaction is caused to proceed by the thermal decomposition of a free-radical polymerization initiator or a method in which the reaction is conducted in a redox system containing a reducing agent.

Examples of the free-radical polymerization initiator include organic peroxides such as cumene hydroperoxide, t-butyl hydroperoxide, benzoyl peroxide, t-butyl peroxyisopropylcarbonate, di-t-butyl peroxide, t-butyl peroxylaurate, lauroyl peroxide, succinic acid peroxide, cyclohexanone peroxide, and acetylacetone peroxide, inorganic peroxides such as potassium persulfate and ammonium persulfate, and azo compounds such as 2,2'-azobisisobutyronitrile and 2,2'-azobis-2,4-dimethylvaleronitrile. Especially preferred of these are the organic peroxides and inorganic peroxides because of their high reactivity.

Examples of the reducing agent for use in the redox system include mixtures such as a ferrous sulfate/glucose/sodium pyrophosphate mixture, ferrous sulfate/dextrose/sodium pyrophosphate mixture, and ferrous sulfate/sodium formaldehydesulfoxylate/ethylenediamineacetate mixture.

The amount of the free-radical polymerization initiator to be used is generally preferably from 0.005 to 20 parts, more preferably from 0.01 to 10 parts, most preferably from 0.03 to 5 parts, per 100 parts of the vinyl monomer (b-2) used. When the amount of the free-radical polymerization initiator is smaller than 0.005 parts, the rate of reaction tends to be low, resulting in a reduced production efficiency. On the other hand, amounts thereof exceeding 20 parts tend to result in increased heat generation during the reaction, making the production difficult.

A chain transfer agent can be used for the radical polymerization according to need. The chain transfer agent is not particularly limited, and any of chain transfer agents for use in ordinary emulsion polymerization may be used.

Examples of the chain transfer agent include t-dodecyl mercaptan, n-octyl mercaptan, n-tetradecyl mercaptan,

and n-hexyl mercaptan.

Although the chain transfer agent is an optional ingredient, it may be used in an amount of preferably from 0.01 to 5 parts per 100 parts of the vinyl monomer (b-2). When the amount of the chain transfer agent is smaller than 0.01 part, the use thereof produces no effect. On the other hand, amounts thereof exceeding 5 parts tend to result in a reduced polymerization rate and hence a reduced production efficiency.

The reaction temperature in the polymerization is generally preferably from 30 to 120°C.

In the polymerization, grafting occurs by the following mechanisms. When the polyorganosiloxane particles (b-1) contain polymerizable vinyl groups, the vinyl monomer (b-2), when polymerized by the action of a free-radical polymerization initiator, reacts with polymerizable vinyl groups of the polyorganosiloxane particles (b-1) to form grafts.

When the polyorganosiloxane particles (b-1) contain no polymerizable vinyl group, a specific free-radical initiator such as t-butyl peroxylaurate is used to abstract a hydrogen atom from a silicon-bonded organic group such as methyl. The free radicals thus generated polymerize the vinyl monomer (b-2) to form grafts.

Still another method for graft formation is to polymerize a vinyl monomer (b-2) containing from 0.1 to 10%, preferably from 0.5 to 5%, silane compound containing a polymerizable vinyl group to cause the silane compound to undergo a redistribution reaction under acidic conditions having a pH of 5 or lower. The mechanism of this graft formation is as follows. Under acidic conditions, the Si-O-Si bonds constituting the backbone of the polyorganosiloxane are in an equilibrium state with respect to cleavage and formation. Because of this, when the vinyl monomer and the silane compound containing a polymerizable vinyl group are copolymerized in the presence of the polyorganosiloxane in that equilibrium state, then silane side chains of the vinyl copolymer which is being obtained or has been obtained by the polymerization react with the polyorganosiloxane chain to thereby form grafts. The silane compound containing a polymerizable vinyl group may be the same as that optionally used in producing the polyorganosiloxane particles (b-1). When the amount of the silane compound containing a polymerizable vinyl group is smaller than 0.1%, the proportion of the vinyl monomer (b-2) which undergoes grafting is reduced. On the other hand, amounts thereof exceeding 10% tend to result in reduced latex stability.

The polymerization of a vinyl monomer (b-2) in the presence of polyorganosiloxane particles yields not only a graft copolymer consisting of a backbone, which is the polyorganosiloxane particles (b-1) in this case, and branches attached thereto, which are a polymer of the vinyl monomer (b-2) in this case, but also a so-called free polymer, as a by-product, which is a product of the polymerization of the branch-forming ingredient alone and has not been grafted onto the backbone. Although the polymerization operation yields a mixture of the graft copolymer and the free polymer, these two are inclusively referred to as a graft copolymer in the invention.

The flame retardant comprising the graft copolymer obtained by emulsion polymerization may be used in the latex form. It is, however, preferred to separate the polymer from the latex and use it as a powder, because the flame retardant in a powder form is usable in a wider range of applications. For separating the polymer, ordinary techniques can be used. Examples thereof include a method which comprises adding a metal salt such as calcium chloride, magnesium chloride, or magnesium sulfate to the latex to coagulate the latex, separating the coagulum from the mixture, and then water-washing, dehydrating, and drying the coagulum. Spray drying is also usable.

Thus, the polyorganosiloxane-containing graft copolymer (B) for use as a flame retardant is obtained.

The fluororesin (C), which is a polymer resin having fluorine atoms, is an ingredient serving as a antidripping agent during burning. Preferred examples thereof from the standpoint of producing a high dripping-preventive effect include fluorinated polyolefin resins such as polymonofluoroethylene, polydifluoroethylene, polytrifluoroethylene, polytetrafluoroethylene, and tetrafluoroethylene/hexafluoroethylene copolymers and poly(vinylidene fluoride) resins. More preferred are the fluorinated polyolefin resins. Especially preferred are the fluorinated polyolefin resins having an average particle diameter of 700 μm or smaller. The term "average particle diameter" as used here for a fluorinated polyolefin resin means the average particle diameter of the secondary particles formed by the agglomeration of the primary particles of the resin. Among the fluorinated polyolefin resins, preferred are ones in which the ratio of the density to the bulk density (density/bulk density) is 6.0 or lower. Density and bulk density herein are determined by the methods as provided for in JIS K 6891. Such fluororesins (C) may be used alone or in combination of two or more thereof.

The antioxidant (D) in the invention is an ingredient used not only for inhibiting the resin from oxidatively decomposing during molding but also for improving flame retardancy. Any antioxidant for use in ordinary molding may be used as the antioxidant (D) without particular limitations. Examples thereof include phenolic antioxidants such as tris[N-(3,5-di-t-butyl-4-hydroxybenzyl)] isocyanurate (e.g., Adeka Stab AO-20, manufactured by Asahi Denka Co., Ltd.), tetrakis[3-(3,5-di-t-butyl-4-hydroxyphenyl)propionyloxymethyl]methane (e.g., Irganox 1010, manufactured by Ciba Specialty Chemicals Co.), butylidene-1,1-bis(2-methyl-4-hydroxy-5-t-butylphenyl) (e.g., Adeka Stab AO-40, manufactured by Asahi Denka Co., Ltd.), and 1,1,3-tris(2-methyl-4-hydroxy-5-t-butylphenyl)butane (e.g., Yoshinox 930, manufactured by Yoshitomi Fine Chemicals Ltd.); phosphorus compound antioxidants such as bis(2,6-di-t-butyl-4-methylphenyl)pentaerythritol phosphite (e.g., Adeka Stab PEP-36, manufactured by Asahi Denka Co., Ltd.), tris(2,4-di-t-butylphenyl) phosphite (e.g., Adeka Stab 2112, manufactured by Asahi Denka Co., Ltd.), and 2,2-methylenebis(4,6-di-t-butylphenyl) octyl phosphite (e.g., Adeka Stab HP-10, manufactured by Asahi Denka Co., Ltd.); and sulfur compound

antioxidants such as dilauryl 3,3'-thiodipropionate (Yoshinox DLTP, manufactured by Yoshitomi Fine Chemicals Ltd.) and dimyristyl 3,3'-thiodipropionate (Yoshinox DMTP, manufactured by Yoshitomi Fine Chemicals Ltd.).

Among these examples, preferred are phenolic antioxidants having nitrogen atom, and phosphorus compound antioxidants having melting point of 100°C or more, preferably 150°C or more, from the standpoints of appearance of flame retardancy.

Examples of phenolic antioxidants having nitrogen atom include tris[N-(3,5-di-t-butyl-4-hydroxybenzyl)] isocyanurate. Examples of phosphorus compound antioxidants having melting point of 100°C or more include bis(2,6-di-t-butyl-4-methylphenyl)pentaerythritol phosphite(melting point is 237°C), tris(2,4-di-t-butylphenyl) phosphite (meliting point is 183°C), 2,2-methylenebis(4,6-di-t-butylphenyl)octyl phosphite (meliting point is 148°C).

The flame-retardant thermoplastic resin composition is obtained by compounding 100 parts of the polycarbonate resin (A) with from 1 to 20 parts, preferably from 1 to 10 parts, more preferably from 1 to 4.5 parts, of the polyorganosiloxane-containing graft copolymer (B), from 0.05 to 1 part, preferably from 0.1 to 0.5 parts, more preferably from 0.1 to 0.4 parts, of a fluororesin (C), and from 0.03 to 2 parts, preferably from 0.05 to 2 parts, more preferably from 0.1 to 1 part, of an antioxidant (D).

When the amount of the polyorganosiloxane-containing graft copolymer (B) used is too small, the composition tends to have reduced flame retardancy. On the other hand, too large amounts thereof tend to result in an increased composition cost, which makes the composition have a reduced commercial value. Too small amounts of the fluororesin (C) used tend to result in reduced flame retardancy, while too large amounts thereof tend to result in a molding having a rough surface. Furthermore, too small amounts of the antioxidant (D) used tend to lessen the effect of improving flame retardancy, while too large amounts thereof tend to result in reduced moldability.

Methods for producing the flame-retardant thermoplastic resin composition are not particularly limited, and ordinary methods can be used. Examples thereof include a method in which the ingredients are mixed together by means of a Henschel mixer, ribbon blender, roll mill, extruder, kneader, or the like.

Compounding ingredients for general use can be added in producing the composition. Examples thereof include plasticizers, stabilizers, lubricants, ultraviolet absorbers, pigments, glass fibers, fillers, polymeric processing aids, polymeric lubricants, and impact modifiers. Preferred examples of the polymeric processing aids include methacrylate (co)polymers such as methyl methacrylate-butyl acrylate copolymers. Preferred examples of the impact modifiers include butadiene rubber impact modifiers (MBS resins), butyl acrylate rubber impact modifiers, and impact modifiers based on a butyl acrylate rubber/silicone rubber composite. One or more other flame retardants may also be used.

Preferred examples of the flame retardants which may be used in combination with the flame retardant described above include silicone compounds such as polyorganosiloxane having aromatic group, triazine compounds such as cyanuric acid and melamine cyanurate, boron compounds such as boron oxide and zinc borate, aromatic metal salts such as sodium alkylbenzenesulfonate , dipotassium diphenylsulfide-4,4'-disulfonate, potassium benzenesulfonate, potassium diphenylsulfonesulfonate, from the standpoints of a nonhalogenated phosphorus-free flame retardant.

Moreover, examples of these may be used in combination with phosphorus compounds such as triphenyl phosphate, polyphosphates, and stabilized red phosphorus. In that case, in a composition including phosphorus flame retardant, it is advantageous that phosphorus flame retardant can be reduced by using polyorganosiloxane-containing graft copolymer in the invention.

The amount of such compounding ingredients to be used is preferably from 0.01 to 20 parts, more preferably from 0.05 to 10 parts, most preferably from 0.05 to 5 parts, per 100 parts of the thermoplastic resin from the standpoint of an effect-cost balance.

For molding the flame-retardant thermoplastic resin composition obtained, molding techniques for ordinary thermoplastic resin compositions can be used. Examples thereof include injection molding, extrusion molding, blow molding, and calendering.

Applications of molded objects obtained from the flame-retardant thermoplastic resin composition of the invention are not particularly limited. For example, the molded objects are usable in applications where flame retardancy is required. Examples of such applications include housing and chassis parts for various OA and information apparatus and domestic electrical appliances, such as desk-top computers, notebook type computers, tower type computers, server computers, printers, copiers, FAX telegraphs, portable phones, PHSs, TV receivers, and video decks, and further include various building members and various automotive members.

EXAMPLES

The invention will be explained below by reference to Examples, but the invention should not be construed as being limited to these Examples only.

In the following Examples and Comparative Examples, measurements and tests were conducted in the following manners.

Conversion into Polymer:

A latex was dried in a 120°C hot-air drying oven for 1 hour to determine the amount of the solid component. The conversion was calculated using the equation:

Conversion into polymer (%) = 100 x (amount of solid component)/(amount of feed monomer).

Toluene Insoluble Content:

In 80 mL of toluene, 0.5 g of solid polyorganosiloxane particles obtained by drying a latex was immersed at room temperature for 24 hours. Thereafter, the mixture was centrifuged at 12,000 rpm for 60 minutes to determine the toluene insoluble content by weight (%) of the polyorganosiloxane particles. Degree of Grafting:

In 80 mL of acetone, 1 g of a graft copolymer was immersed at room temperature for 48 hours. Thereafter, the mixture was centrifuged at 12,000 rpm for 60 minutes to determine the insoluble content (w) of the graft copolymer. The degree of grafting was calculated using the following equation.

Degree of grafting (%) = 100 x {[w-1 x (proportion of polyorganosiloxane component in graft copolymer)]/[1 x (proportion of polyorganosiloxane component in graft copolymer)]}

Average Particle Diameter:

Polyorganosiloxane particles and a graft copolymer both in a latex form were examined for average particle diameter. Each particulate material was analyzed with MICROTRAC UPA, manufactured by LEED & NORTHRUP INSTRUMENTS, by the light scattering method to determine the number-average particle diameter (μm) and the coefficient of variation of the particle diameter distribution (standard deviation/number-average particle diameter) (%).

Impact Resistance:

Impact resistance was evaluated through an Izod test at 23°C using a notched 1/8-inch bar in accordance with ASTM D-256.

Flame Retardancy:

A vertical flame test was conducted in accordance with UL94 Test V. Flame retardancy was evaluated in terms of the total combustion time for five samples.

REFERENCE EXAMPLE 1

Production of Polyorganosiloxane Particles (S-1):

An aqueous solution consisting of the following ingredients was agitated with a homomixer at 10,000 rpm for 5 minutes to prepare an emulsion.

| Ingredient | Amount (parts) |
|---|---|
| Pure water | 251 |
| Sodium dodecylbenzenesulfonate (SDBS) | 0.5 |
| Octamethylcyclotetrasiloxane (D4) | 100 |
| γ-Acryloyloxypropyldimethoxymethylsilane (DSA) | 5 |

The emulsion was introduced as a whole into a five-necked flask equipped with a stirrer, a reflux condenser, an inlet for introducing nitrogen gas, an inlet for introducing monomers, and a thermometer. While the system was being stirred, 1 part (on a solid basis) of 10% aqueous dodecylbenzenesulfonic acid (DBSA) solution was added thereto. The resultant mixture was heated to 80°C over about 40 minutes, subsequently reacted at 80°C for 6 hours, and then cooled to 25°C and allowed to stand for 20 hours. Thereafter, the pH of the system was returned to 6.8 with sodium hydroxide to complete polymerization. Thus, a latex containing polyorganosiloxane particles (S-1) was obtained. The

latex was examined for conversion into polymer, average particle diameter of the polyorganosiloxane particles, and toluene insoluble content. The results obtained are shown in Table 1.

REFERENCE EXAMPLE 2

Production of Polyorganosiloxane Particles (S-2) :

An aqueous solution consisting of the following ingredients was agitated with a homomixer at 10,000 rpm for 5 minutes to prepare an emulsion.

| Ingredient | Amount (parts) |
|---|---|
| Pure water | 251 |
| SDBS | 0.5 |
| D4 | 70 |
| DSA | 5 |

The emulsion was introduced as a whole into a five-necked flask equipped with a stirrer, a reflux condenser, an inlet for introducing nitrogen gas, an inlet for introducing monomers, and a thermometer. While the system was being stirred, 1 part (on a solid basis) of 10% aqueous DBSA solution was added thereto. The resultant mixture was heated to 80°C over about 40 minutes and then reacted at 80°C for 1 hour. Subsequently, 30 parts of diphenyldimethoxysilane (DPhS) was added dropwise thereto over 3 hours. After the addition, the reaction mixture was stirred for 2 hours and then cooled to 25°C and allowed to stand for 20 hours. Thereafter, the pH of the system was returned to 6.5 with sodium hydroxide to complete polymerization. Thus, a latex containing polyorganosiloxane particles (S-2) was obtained. The latex was examined for conversion into polymer, average particle diameter of the polyorganosiloxane particles, and toluene insoluble content. The results obtained are shown in Table 1.

REFERENCE EXAMPLE 3

Production of Polyorganosiloxane Particles (S-3):

The following ingredients were introduced into a five-necked flask equipped with a stirrer, a reflux condenser, an inlet for introducing nitrogen gas, an inlet for introducing monomers, and a thermometer.

| Ingredient | Amount (parts) |
|---|---|
| Pure water | 189 |
| SDBS | 1.2 |

The contents were heated to 70°C while replacing the atmosphere in the flask with nitrogen, and an aqueous solution consisting of 1 part of pure water and 0.02 parts of potassium persulfate (KPS) was added thereto. Subsequently, a liquid mixture of the following ingredients was added thereto as a whole.

| Ingredient | Amount (parts) |
|---|---|
| Styrene (St) | 0.7 |
| Butyl methacrylate (BMA) | 1.3 |

The resultant mixture was stirred for 1 hour to complete polymerization. Thus, a latex of an St-BMA copolymer was obtained. The conversion into polymer was 99%. The latex obtained had a solid content of 1.0% and an average particle diameter of 0.01 μm. The coefficient of variation of particle diameter was 38%. The St-BMA copolymer had a solvent insoluble content of 0%.

Separately, a mixture consisting of the following ingredients was agitated with a homomixer at 10,000 rpm for 5 minutes to prepare an emulsion of polyorganosiloxane-forming ingredients.

| Ingredient | Amount (parts) |
|---|---|
| Pure water | 70 |

(continued)

| Ingredient | Amount (parts) |
|---|---|
| SDBS | 0.5 |
| D4 | 94 |
| Vinyltrimethoxysilane | 4 |

While the St-BMA copolymer latex was kept at 80°C, 2 parts (on a solid basis) of 10% aqueous DBSA solution was added thereto and the emulsion of polyorganosiloxane-forming ingredients was then added thereto as a whole. The resultant mixture was continuously stirred for 6 hours and then cooled to 25°C and allowed to stand for 20 hours. Thereafter, the pH of the reaction mixture was adjusted to 6.6 with sodium hydroxide to complete polymerization. Thus, a latex containing polyorganosiloxane particles (S-3) was obtained. The latex was examined for conversion into polymer, average particle diameter of the polyorganosiloxane particles, and toluene insoluble content. The results obtained are shown in Table 1. From the monomer feed amounts and conversion, the polyorganosiloxane particles in this latex were found to consist of 98% polyorganosiloxane and 2% St-BMA copolymer.

Table 1

| | Reference Example 1 | Reference Example 2 | Reference Example 3 |
|---|---|---|---|
| Polyorganosiloxane particles | S-1 | S-2 | S-3 |
| Conversion into polymer of polyoranosiloxane-forming ingredients (%) | 87 | 87 | 88 |
| Average particle diameter (μm)<br>Coefficient of variation (%) | 0.15<br>35 | 0.13<br>35 | 0.03<br>40 |
| Toluene insoluble content (%) | 0 | 0 | 55 |

REFERENCE EXAMPLES 4 TO 8

Into a five-necked flask equipped with a stirrer, a reflux condenser, an inlet for introducing nitrogen gas, an inlet for introducing monomers, and a thermometer were introduced 300 parts of pure water, 0.2 parts of sodium formaldehydesulfoxylate (SFS), 0.01 part of disodium ethylenediaminetetraacetate (EDTA), 0.0025 parts of ferrous sulfate, and the polyorganosiloxane particles shown in Table 2. The system was heated to 60°C with stirring in a nitrogen stream. After the temperature of the system had reached 60°C, the monomer/free-radical polymerization initiator mixture shown in Table 2 was added thereto dropwise over 4 hours in one or two steps as shown in Table 2. Thereafter, the reaction mixture was continuously stirred at 60°C for 1 hour to thereby obtain a latex of a graft copolymer.

Subsequently, the latex was diluted with pure water to adjust the solid concentration to 15%, and 2 parts (on a solid basis) of 10% aqueous calcium chloride solution was added thereto to obtain a coagulum slurry. This coagulum slurry was heated to 80°C, subsequently cooled to 50°C, and then dehydrated and dried. Thus, polyorganosiloxane-containing graft copolymers (SG-1 to SG-5) were obtained in a powder form. The conversion into polymer, average particle diameter, and degree of grafting for each powder are shown in Table 2.

In Table 2, MMA indicates methyl methacrylate, AN acrylonitrile, BA butyl acrylate, and AlMA allyl methacrylate (all of these are monomers). Furthermore, CHP indicates cumene hydroperoxide (free-radical polymerization initiator) and SP indicates the solubility parameter determined by the method described hereinabove.

Table 2

| Reference Example No. | | 4 | 5 | 6 | 7 | 8 |
|---|---|---|---|---|---|---|
| Polyorganosiloxane partilces (parts) | S-1 | 65 | - | 90 | - | - |
| | S-2 | - | 75 | - | - | 75 |
| | S-3 | - | - | - | 70 | - |

Table 2 (continued)

| Reference Example No. | | 4 | 5 | 6 | 7 | 8 |
|---|---|---|---|---|---|---|
| Vinyl monomer, 1st step (parts) | MMA | 35 | - | 10 | 30 | - |
| | St | - | 7.5 | - | - | - |
| | AN | - | 2.5 | - | - | - |
| | BA | - | - | - | - | 9.8 |
| | AlMA | - | - | - | - | 0.2 |
| | CHP | 0.11 | 0.03 | 0.03 | 0.09 | 0.03 |
| Vinyl monomer, 2nd step (parts) | MMA | - | - | - | - | 15 |
| | St | - | 11.25 | - | - | - |
| | AN | - | 3.75 | - | - | - |
| | BA | - | - | - | - | - |
| | AlMA | - | - | - | - | - |
| | CHP | - | 0.05 | - | - | 0.05 |
| Conversion (%) | 1st step | 98 | 98 | 99 | 99 | 98 |
| | 2nd step | - | 99 | - | - | 99 |
| SP of vinyl polymer [$(cal/cm^3)^{1/2}$] | | 9.25 | 9.95 | 9.25 | 9.25 | 9.14 |
| Degree of grafting (%) | | 42 | 27 | 9 | 26 | 31 |
| Graft copolymer No. | | SG-1 | SG-2 | SG-3 | SG-4 | SG-5 |

EXAMPLES 1 TO 5 AND COMPARATIVE EXAMPLES 1 TO 7:

Flameproofing of Polycarbonate Resin

Mixtures were obtained from polycarbonate resins PC-1 (Tarflon A-2200; manufactured by Idemitsu Petrochemical Co., Ltd.; viscosity-average molecular weight, 22,000) and PC-2 (Tarflon A-1900; manufactured by Idemitsu Petrochemical Co., Ltd.; viscosity-average molecular weight, 19,000), the polyorganosiloxane-containing graft copolymers obtained in Reference Examples 4 to 8 (SG-1 to SG-5), PTFE (polytetrafluoroethylene: Polyflon FA-500, manufactured by Daikin Industries, Ltd.) and antioxidants AO-20 (Adeka Stab AO-20, manufactured by Asahi Denka Co., Ltd.) and PEP-36 (Adeka Stab PEP 36, manufactured by Asahi Denka Co., Ltd.) according to the formulations shown in Table 3.

The mixtures obtained each were melt-kneaded with a twin-screw extruder (TEX44SS, manufactured by The Japan Steel Works, Ltd.) at 280°C to produce pellets. The pellets of each composition obtained were molded with injection molding machine FAS 100B, manufactured by FANUC Ltd., having a cylinder temperature set at 270°C to produce 1/8-inch Izod test pieces and 1/16-inch test pieces for flame retardancy evaluation. The test pieces obtained were used for property evaluations according to the evaluation methods described above.

The results obtained are shown in Table 3.

Table 3

| Example No. | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|
| Thermoplastic resin | PC-1 | 100 | - | 100 | 100 | 100 | 100 | - | 100 | 100 | 100 | 100 | - |
| | PC-2 | - | 100 | - | - | - | - | 100 | - | - | - | - | 100 |
| Graft copolymer | SG-1 | 3 | - | - | - | - | 3 | - | - | - | - | - | - |
| | SG-2 | - | 3 | - | - | - | - | 3 | - | - | - | - | - |
| | SG-3 | - | - | 3 | - | - | - | - | 3 | - | - | - | - |
| | SG-4 | - | - | - | 3 | - | - | - | - | 3 | - | - | - |
| | SG-5 | - | - | - | - | 3 | - | - | - | - | 3 | - | - |
| Antioxidant | AO-20 | 0.3 | 0.3 | 0.3 | 0.3 | 0.3 | - | - | - | - | - | 0.3 | 0.3 |
| | PEP-36 | 0.3 | 0.3 | 0.3 | 0.3 | 0.3 | - | - | - | - | - | 0.3 | 0.3 |
| Antidripping agent | PTFE | 0.5 | 0.5 | 0.5 | 0.5 | 0.5 | 0.5 | 0.5 | 0.5 | 0.5 | 0.5 | 0.5 | 0.5 |
| Flame retardancy | Total combustion time (sec) | 20 | 15 | 40 | 20 | 45 | 35 | 40 | 60 | 40 | 80 | 160 | 170 |
| | Dripping | not occurred | not occurred | not occurred | not occurred | not occurred | not occurred | not occurred | not occurred | not occurred | not occurred | occurred | occurred |
| Impact resistance | ($kJ/m^2$) | 88 | 80 | 85 | 87 | 80 | 88 | 80 | 85 | 87 | 78 | 84 | 75 |

EXAMPLE 6 AND COMPARATIVE EXAMPLES 8 AND 9

Flameproofing of Polycarbonate/Poly(Ethylene Terephthalate) Mixed Resin:

Mixtures were obtained from PC-1, a poly(ethylene terephthalate) resin (PET: Bellpet EFG-70, manufactured by Kanebo, Ltd.), the polyorganosiloxane-containing graft copolymer obtained in Reference Example 5 (SG-2), PTFE, and an antioxidant (PEP-36: Adeka Stab PEP-36, manufactured by Asahi Denka Co., Ltd.) according to the formulations shown in Table 4.
The mixtures obtained each were melt-kneaded with a twin-screw extruder (TEX44SS, manufactured by The Japan Steel Works, Ltd.) at 260°C to produce pellets. The pellets of each composition obtained were molded with injection molding machine FAS 100B, manufactured by FANUC Ltd., having a cylinder temperature set at 260°C to produce 1/8-inch Izod test pieces and 1/10-inch test pieces for flame retardancy evaluation. The test pieces obtained were used for property evaluations according to the evaluation methods described above.
The results obtained are shown in Table 4.

Table 4

| Example No. | | Example | Comparative Example | |
|---|---|---|---|---|
| | | 6 | 8 | 9 |
| Thermoplastic Resin | PC-1 | 90 | 90 | 90 |
| | PET | 10 | 10 | 10 |
| Graft copolymer | SG-2 | 4.5 | 4.5 | - |
| Antioxidant | PEP-36 | 0.5 | - | 0.5 |
| Antidripping agent | PTFE | 0.5 | 0.5 | 0.5 |
| Flame retardancy | Total Combustion time (sec) | 45 | 60 | 175 |
| | Dripping | not occurred | not occurred | occurred |
| Impact resistance | ($kJ/m^2$) | 70 | 60 | 41 |

Table 4 shows that a flame-retardant thermoplastic resin composition having an excellent balance between flame retardancy and impact resistance is obtained by incorporating a polyorganosiloxane-containing graft copolymer, fluororesin, and antioxidant into a polycarbonate/poly(ethylene terephthalate) mixed resin.
According to the invention, a flame-retardant thermoplastic resin composition having an excellent balance between flame retardancy and impact resistance can be obtained.

## Claims

**1.** Use of an antioxidant and a polyorganosiloxane-containing graft copolymer obtained by polymerizing at least one vinyl monomer (b-2) in the presence of polyorganosiloxane particles (b-1) as flame retardants in a flame-retardant thermoplastic resin composition comprising:

(A) 100 parts by weight of a polycarbonate resin,
(B) from 1 to 20 parts by weight of the polyorganosiloxane-containing graft copolymer,
(C) from 0.05 to 1 part by weight of a fluororesin, and
(D) from 0.03 to 2 parts by weight of the antioxidant.

**2.** The use according to claim 1,
wherein the polyorganosiloxane-containing graft copolymer is obtained by polymerizing from 60 to 10% by weight at least one vinyl monomer (b-2) in the presence of from 40 to 90% by weight polyorganosiloxane particles (b-1) having an average particle diameter of from 0.008 to 0.6 µm, and
wherein a polymer obtained by polymerizing the vinyl monomer has a solubility parameter of from 9.15 to 10.15 $(cal/cm^3)^{1/2}$.

**3.** The use according to claim 1 or 2, wherein the polyorganosiloxane particles (b-1) are in the form of a latex.

4. The use according to any one of claims 1 to 3, wherein the vinyl monomer (b-2) is at least one monomer selected from the group consisting of an aromatic vinyl monomer, a vinyl cyanide monomer, a (meth)acrylic ester monomer, and a carboxyl-containing vinyl monomer.

**Patentansprüche**

1. Verwendung eines Antioxidans und eines Polyorganosiloxan enthaltenden Pfropfcopolymers, welches durch Polymerisieren mindestens eines Vinylmonomers (b-2) in Gegenwart von Polyorganosiloxanteilchen (b-1) erhältlich ist, als flammenhemmende Mittel in einer flammenhemmenden thermoplastischen Harzzusammensetzung, umfassend:

   (A) 100 Gewichtsteile eines Polycarbonatharzes,
   (B) von 1 bis 20 Gewichtsteile des Polyorganosiloxan enthaltenden Pfropfcopolymers,
   (C) von 0,05 bis 1 Gewichtsteil eines Fluorharzes, und
   (D) von 0,03 bis 2 Gewichtsteile des Antioxidans.

2. Verwendung gemäß Anspruch 1, wobei das Polyorganosiloxan enthaltende Pfropfcopolymer durch Polymerisieren von 60 bis 10 Gew.% mindestens eines Vinylmonomers (b-2) in Gegenwart von 40 bis 90 Gew.% Polyorganosiloxanteilchen (b-1) mit einem durchschnittlichen Teilchendurchmesser von 0,008 bis 0,6 μm erhalten wird, und wobei ein Polymer, das durch Polymerisieren des Vinylmonomers erhalten wird, einen Löslichkeitsparameter von 9,15 bis 10,15 $(cal/cm^3)^{1/2}$ aufweist.

3. Verwendung gemäß Anspruch 1 oder 2, wobei die Polyorganosiloxanteilchen (b-1) in Form eines Latex sind.

4. Verwendung gemäß einem der Ansprüche 1 bis 3, wobei das Vinylmonomer (b-2) mindestens ein Monomer ist, das aus einem aromatischen Vinylmonomer, einem Vinylcyanidmonomer, einem (Meth)acrylsäureestermonomer und einem Carboxyl enthaltenden Vinylmonomer ausgewählt ist.

**Revendications**

1. Utilisation d'un antioxydant et d'un copolymère greffé contenant un polyorganosiloxane obtenu en polymérisant au moins un monomère de vinyle (b-2) en présence de particules de polyorganosiloxane (b-1) en tant qu'ignifuges dans une composition de résine thermoplastique ignifuge comprenant :

   (A) 100 parties en poids d'une résine de polycarbonate,
   (B) de 1 à 20 parties en poids du copolymère greffé contenant un polyorganosiloxane,
   (C) de 0,05 à 1 partie en poids d'une fluorésine, et
   (D) de 0,03 à 2 parties en poids de l'antioxydant.

2. Utilisation selon la revendication 1,
   où le copolymère greffé contenant un polyorganosiloxane est obtenu en polymérisant de 60 à 10 % en poids d'au moins un monomère de vinyle (b-2) en présence de 40 à 90 % en poids de particules de polyorganosiloxane (b-1) ayant un diamètre moyen de particule de 0,008 à 0,6 μm, et
   où un polymère obtenu en polymérisant le monomère de vinyle a un paramètre de solubilité de 9,15 à 10,15 $(cal/cm^3)^{1/2}$.

3. Utilisation selon la revendication 1 ou 2, où les particules de polyorganosiloxane (b-1) sont sous la forme d'un latex.

4. Utilisation selon l'une quelconque des revendications 1 à 3, où le monomère de vinyle (b-2) est au moins un monomère choisi dans le groupe consistant en un monomère de vinyle aromatique, un monomère de cyanure de vinyle, un monomère d'ester (méth)acrylique, et un monomère de vinyle contenant un carboxyle.